# Europäisches Patentamt
# European Patent Office
# Office européen des brevets

(19)

(11) Veröffentlichungsnummer : **0 063 250**
**B1**

(12) **EUROPÄISCHE PATENTSCHRIFT**

(45) Veröffentlichungstag der Patentschrift :
02.12.87

(21) Anmeldenummer : 82102349.6

(22) Anmeldetag : 22.03.82

(51) Int. Cl.⁴ : **A 47 F  1/18**, A 47 B  88/16,
**B 29 C  33/00**

(54) Schubladen-Magazin, insbesondere für die Vorratshaltung und/oder Lagerung von Kleinteilen.

(30) Priorität : 31.03.81 DE 8109516 U

(43) Veröffentlichungstag der Anmeldung :
27.10.82 Patentblatt 82/43

(45) Bekanntmachung des Hinweises auf die Patenterteilung : 02.12.87 Patentblatt 87/49

(84) Benannte Vertragsstaaten :
BE CH DE FR GB IT LI NL SE

(56) Entgegenhaltungen :
BE-A-   570 805
DE-B- 1 298 950
GB-A- 1 328 193
US-A- 2 964 371

(73) Patentinhaber : Fritz Schäfer Gesellschaft mit beschränkter Haftung
Fritz-Schäfer-Strasse 20
D-5908 Neunkirchen (DE)

(72) Erfinder : Schäfer, Gerhard
Oberes Gerstenfeld 2
D-5908 Neunkirchen-Salchendorf (DE)

(74) Vertreter : Müller, Gerd et al
Patentanwälte HEMMERICH-MÜLLER-GROSSE-
POLLMEIER-MEY Hammerstrasse 2
D-5900 Siegen 1 (DE)

## Beschreibung

Die Erfindung betrifft ein Schubladen-Magazin, insbesondere für die Vorratshaltung und/oder Lagerung von Kleinteilen, bestehend aus einem mindestens ein horizontales Fach aufweisenden Gehäuse und aus in dieses herausziehbar eingesetzten Schubladen, wobei einerseits an oder nahe der oberen, vorderen Begrenzungskante jedes Faches eine Anschlagfläche und andererseits an der oberen, hinteren Begrenzungskante jeder Schublade eine Gegenanschlagfläche vorgesehen ist, die in gegenseitiger Anlage den horizontalen Auszugweg der Schubladen begrenzen, hingegen das völlige Herausnehmen der ausgezogenen Schubladen in einer von vorne nach hinten gekippten Lage ermöglichen, und wobei die Anschlagflächen am Gehäuse durch von der oberen, vorderen Begrenzungskante jedes Faches nach abwärts in den Lichtraum der Fächer gerichteten Stege gebildet sind, gegen die der rückwärtige, obere Abschnitt der Schubladen in Ausgangsstellung als Gegenanschlag in Anschlagverbindung bringbar ist.

Ein Schubladen-Magazin dieser Art ist bereits bekannt durch die US-A-2 964 371. Eine Unzulänglichkeit dieses bekannten Schubladen-Magazins besteht darin, daß die Schubladen eine an das Gehäuse oder dessen Fächer genau angepaßte Ausgestaltung haben müssen und daher nur in kombinatorischer Verbindung mit dem Gehäuse einsatzfähig sind.

Eine andere Unzulänglichkeit bei dem bekannten Schubladen-Magazin ist darin zu sehen, daß die einzelnen Fächer im Gehäuse eine nach rückwärts und unten geneigte Einbaulage im Gehäuse haben, so daß auch die Schubladen in ihrer eingeschobenen Stellung eine entsprechend geneigte Lage einnehmen und daher in ihrer Ausbildung speziell hieran angepaßt werden müssen.

Eine vom Gehäuse des Schubladen-Magazins unabhängige Benutzung der Schubladen, insbesondere für selbständig stapelfähige Lagersysteme, ist jedoch nicht möglich.

Bekannt ist durch das DE-U-19 24 532 auch bereits ein Einbauregal mit einem rahmenartigen Gehäuse, das mehrere horizontal übereinanderliegende Fächer aufweist.

Bei diesem Einbauregal werden als Schubladen bereits Lagersichtkästen verwendet.

Dieses mit Lagersichtkästen als Schubladen ausgerüstete Einbauregal weist jedoch den Nachteil auf, daß die Schubladen bzw. Lagersichtkästen nur von der Rückseite des Regals her in dessen Fächer eingesetzt werden können und sich auch nur nach dort wieder herausnehmen lassen. Nach der Vorderseite hin können jedoch die Schubladen bzw. Lagersichtkästen nur teilweise aus den Fächern des Einbauregals herausgezogen werden.

Der Gebrauchswert dieses bekannten Einbauregals ist erheblich beeinträchtigt, weil bspw. nicht die Möglichkeit der Aufstellung an einer Wand besteht.

Ziel der Erfindung ist es, ein Schubladen-Magazin der eingangs spezifizierten Gattung zu schaffen, welches stapelfähig ist und beim Transport unter Verwendung von Schubladen, die auch als selbständiges, insbesondere stapelbares, Lagersystem verwendbar sind, und/oder unter Verwendung von standardmäßigen, stapelbaren Lagerkästen als Schubladen-Einsätze ein Herausrutschen der Schubladen verhindert.

Die Lösung dieser Aufgabe wird nach der Erfindung auf einfache Weise durch die Kennzeichnungsmerkmale des Anspruchs 1 erreicht.

Diese bestehen darin, daß die Schubladen aus stapelbaren Lagerkästen, insbesondere Sichtlagerkästen, mit wenigstens dreiseitig umlaufenden angeordnetem, seitwärts und nach oben abgewinkeltem Stapelrand bestehen, bei denen der nach oben abgewinkelte Flansch des rückwärtigen Stapelrand-Abschnittes den Gegenanschlag bildet, daß am unteren Ende der Seitenwände des Gehäuses Ausklinkungen und am oberen Ende derselben Zungen ausgebildet sind, die bei mehreren übereinandergesetzten Gehäusen zur Lagensicherung wechselseitig ineinandergreifen, und daß mit Abstand vor der an der hinteren, unteren Begrenzungskante vorgesehenen Gegenanschlagfläche jedes Faches auf dem Fachboden Rastnocken ausgebildet sind und die die Schubladen bildenden Lagersichtkästen an ihrem hinteren Ende bodennah eine Gegenrast aufweisen.

Nach Anspruch 2 können die Ausklinkungen sich in und die Zungen sich auf normal zur Ebene der Seitenwände des Gehäuses gerichteten Umfangsstegen derselben befinden. Ferner ist nach Anspruch 3 vorgeschlagen, daß die Umfangsstege der einen Seitenwand des Gehäuses außenseitig und die Umfangsstege der anderen Seitenwand des Gehäuses komplementär dazu innenseitig mit Anfasungen oder Falzungen versehen sind, die bei Nebeneinanderanordnung mehrerer Gehäuse zur Lagensicherung wechseisetig ineinandergreifen.

Gemäß Anspruch 4 besteht ein Weiterbildungsmerkmal darin, daß auf dem Boden jedes Faches mehrere Rastnocken mit Abstand nebeneinander vorgesehen sind, während die Gegenrast der die Schubladen bildenden Lagersichtkästen aus über deren Breite durchgehenden Leisten bestehen. Es ist ferner nach Anspruch 5 möglich, daß die Rastnocken eine den Gegenanschlagflächen zugewendete steile, vorzugsweise zu diesen parallel verlaufende, Flanke sowie eine von diesen abgewendete, flach geneigte Flanke haben, während die Gegenrast außenseitig eine Anfasung oder Abrundung hat und innenseitig eine normal zur Bodenebene gerichtete Eingriffsfläche aufweist.

Als zweckmäßig hat es sich des weiteren herausgestellt, wenn nach der Lehre des Anspruchs 6 die Rastnocken im Bereich von Fensterausschnitten der Gegenanschlagflächen auf die Fachböden geformt sind.

Für die Stapelfähigkeit der Schubladen-Magazine ist es nach der Erfindung weiterhin wichtig, daß gemäß Anspruch 7 zwischen den Seitenwänden des Gehäuses unterhalb der die Zungen tragenden Umfangsstege ein Griffstab angeordnet ist. Dabei ist es erfindungsgemäß ferner von Bedeutung, daß nach Anspruch 8 der Griffstab zwischen den Seitenwänden mit Abstand oberhalb der Gehäusedecke liegt, die dabei als muldenförmig vertieftes Ablagefach, z. B. für Werkzeuge, ausgebildet sein kann.

Für eine sichere Ausrichtung der Schubladen-Einsätze während des Transportes hat es sich ferner als wichtig erwiesen, daß gemäß Anspruch 9 die Fächer des Gehäuses mindestens bodenseitig mit in Richtung der Gehäusetiefe bzw. quer zu der Gegenanschlagfläche verlaufenden Trenn- und/oder Führungsstegen versehen sind. Diese können sich nach Anspruch 10, zur Erhöhung der Stabilität des Gehäuses, als sich über die ganze Höhe des Faches erstreckende, mit Fachdecke und -boden verbundene Versteifungswände ausgebildet werden.

Für Schubladen-Magazine, bei denen die als Lagerkästen ausgebildeten Schubladen an ihren bodenseitigen Längskanten seitwärts auskragende Randleisten haben, ist es ferner zur zweckentsprechenden Benutzung von Vorteil, daß gemäß Anspruch 11 die Trenn- und/oder Führungsstege bzw. Versteifungswände mit die Randleisten der als Lagerkästen ausgebildeten Schubladen übergreifenden Stützstegen oder -zungen versehen sind.

Wenn gemäß Anspruch 12 zwischen den Seitenwänden des Gehäuses an den oberen, vorderen Begrenzungskanten der Fächer Klappen doer Laschen angelenkt sind, die wenigstens einen oberen Teilabschnitt an der vorderen Querseite der als Lagersichtkästen ausgebildeten Schubladen abdecken, dann kann beim Transport der Schubladen-Magazine ein Herausfallen von Teilen aus den Lagersichtkästen verhindert werden. Diesem Zweck ist es dabei besonders dienlich, wenn gemäß Anspruch 13 die Klappen oder Laschen in ihrer Abdecklage am Gehäuse, insbesondere an den Gehäuseseitenwänden, verriegelbar sind.

Eine materialsparende und fertigungsgünstige Ausgestaltung der Schubladen-Magazine wird nach Anspruch 14 auch dadurch erreicht, daß oberhalb der Gegenanschlagflächen die Rückwand des Gehäuses im Bereich jedes Faches Ausschnitte aufweist, die unmittelbar unter der zugehörigen Fachdecke enden sowie sich über die gesamte Lichtweite des Faches erstrecken. Gänzlich geschlossene, materialaufwendige Rückwände am Gehäuse werden hierdurch vermieden.

Wird zur Herstellung der Gehäuse für die Schubladen-Magazine ein Formwerkzeug mit einer mehrteiligen Hauptform für die Außenkonturen des Gehäuses benutzt, der die Innenkonturen des Gehäuses und der Fächer bestimmende Kernformen zugeordnet sind, welche aus relativ zur Hauptform verschiebbaren Zügen bestehen, dann erweist es sich nach der Erfindung als besonders wichtig, daß — entsprechend dem Kennzeichnungsteil des Anspruchs 15 — im Formbereich für jedes Fach zwei nach entgegengesetzten Seiten verschiebbar übereinander angeordnete Züge die Kernform bilden, wobei der obere, nach rückwärts verschiebbare Zug an seinem hinteren Ende due Außenkontur der Hakenglieder aufweist, während der untere, nach rückwärts verschiebbare Zug an seinem hinteren Ende die Außenkontur der Hakenglieder hat und an seinem sorderen Ende der Innenkontur der streifenförmigen Rückwandabschnitte angepaßt ist, daß beide Züge an ihren Längsseiten miteinander die Innenkontur für die Trenn- und/oder Führungsstege bzw. für die Versteifungswände der Fächer sowie auch für die daran befindlichen Stützstege oder -zungen bilden und daß der untere nach vorwärts verschiebbare Zug an seiner Unterseite Ausnehmungen zur Bildung der Rastnocken aufweist.

Weitere Merkmale und Vorteile des Gegenstandes der Erfindung werden nachfolgend anahnd einer Zeichnung ausführlich erläutert Es zeigt :

Fig. 1 in Ansicht von vorne und teilweise weggebrochener Darstellung ein Schubladen-Magazin, bestehend aus einem mit mehreren Fächern versehenen Gehäuse und in die Fächer einsetzbaren Schubladen, wobei nur eine Schublade dargestellt ist,

Fig. 2 einen Vertikalschnitt längs der Linie II-II durch das Schubladen-Magazin nach Fig. 1 mit in eines der Fächer eingeschobener Schublade,

Fig. 3 einen Teilausschnitt aus Fig. 2 bei aus dem Fach herausgezogener Schublade,

Fig. 4 in teilweiser Seitenansicht ein Schubladen-Magazin mit zwei aufeinandergesetzten Gehäusen,

Fig. 5 einen Schnitt längs der Linie V-V durch eine Seitenwand am Gehäuse des Schubladenmagazins,

Fig. 6 eine Draufsicht auf eine Seitenwand am Gehäuse des Schubladen-Magazins in Pfeilrichtung VI in Fig. 4,

Fig. 7 einen der Fig. 5 entsprechenden Schnitt durch die einander benachbarten Seitenwände der Gehäuse zweier nebeneinander aufgestellter Schubladen-Magazine,

Fig. 8 einen Ausschnittsbereich aus dem Schubladenmagazin nach Fig. 1 in etwas abgewandelter Ausführung,

Fig. 9 eine der Fig. 1 entsprechende Darstellung eines Schubladen-Magazins in etwas abgewandelter Ausführung,

Fig. 10 einen Vertikalschnitt längs der Linie X-X durch das Schubladen-Magazin nach Fig. 9,

Fig. 11 einen Teilausschnitt aus Fig. 10 bei aus dem Fach herausgezogener Schublade,

Fig. 12 einen Vertikalschnitt durch ein Formwerkzeug zur Herstellung der Gehäuse für die Schubladen-Magazine und

Fig. 13 einen Schnitt längs der Linie XIII-XIII durch das Formwerkzeug nach Fig. 12 in dem der Fig. 8 entsprechenden Ausschnittsbereich.

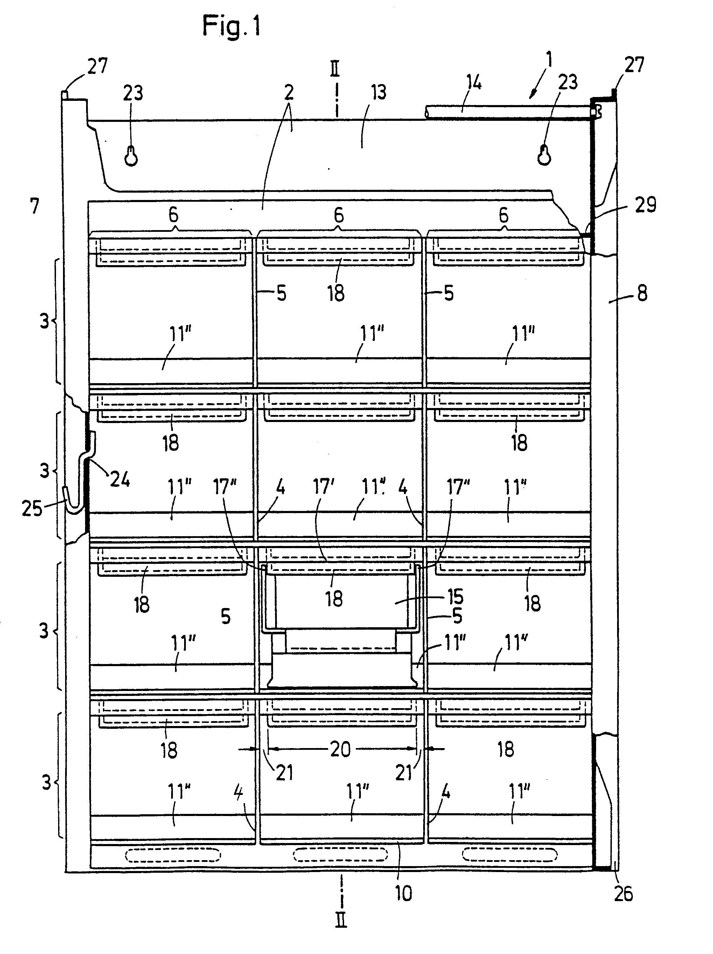

In den Fig. 1 bis 3 ist ein Schubladenmagazin 1 gezeigt, welches bspw. für die getrennte Vorratshaltung und/oder Lagerung verschiedener Kleinteile, wie bspw. Schrauben, Muttern, Unterlegscheiben oder dergleichen benutzt werden kann.

Dieses Schubladen-Magazin weist dabei ein Gehäuse 2 auf, das mehrere, bspw. vier übereinanderliegende Fächer 3 enthält, während jedes wiederum durch Trenn- und/oder Führungsstege 4 bzw. durch Versteifungswände 5 in mehrere, bspw. drei, nebeneinanderliegende Abteile 6 getrennt ist.

Das Gehäuse 2 hat dabei zwei völlig geschlossene Seitenwände 7 und 8, eine ebenfalls völlig geschlossene Decke 9 sowie einen ebenfalls vollkommen geschlossenen Boden 10.

Die Rückwand 11 des Gehäuses 2 ist nicht völlig geschlossen ausgeführt, sondern wird jeweils von kurzen Wandabschnitten 11' und 11'' gebildet, wobei sich der Wandabschnitt 11' nach oben an die Decke 9 anschließt, während jeder Wandabschnitt 11'' als nach aufwärts gerichtete, streifenförmige Verlängerung des Bodens 10 bzw. der zwischen diesem und der Decke 9 im Abstand übereinander eingeformten Fachböden 12 ausgeführt ist.

Die Decke 9 des Gehäuses 1 ist zwischen den beiden Seitenwänden 7 und 8 als muldenförmig vertieftes Ablagefach 13, beispielsweise für Werkzeuge od. dgl. ausgeführt und oberhalb desselben ist zwischen die Seitenwände 7 und 8 ein Griffstab 14 eingesetzt, der einen leichten Transport des Schubladen-Magazins ermöglicht.

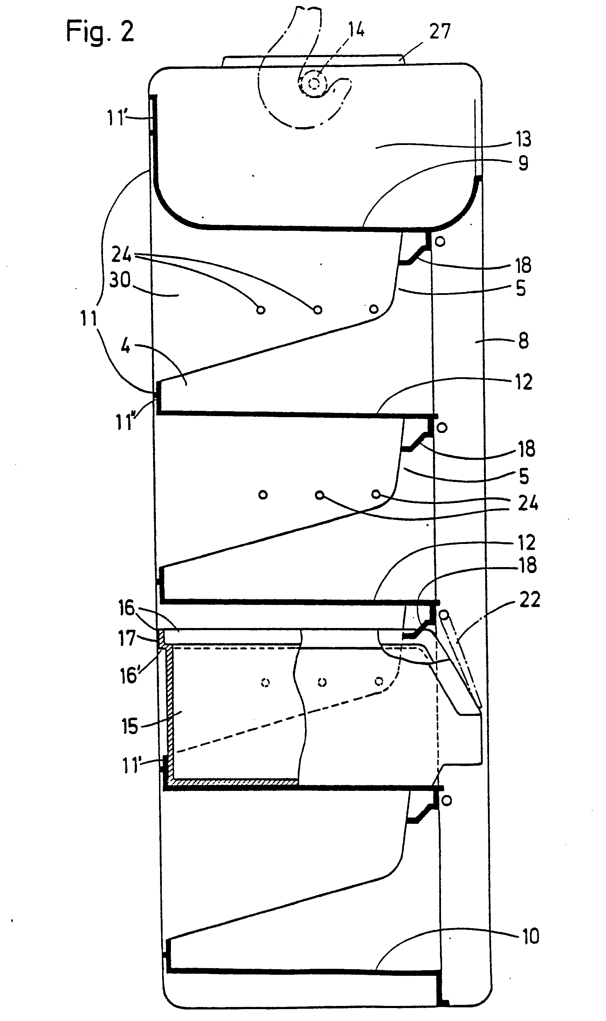

Die streifenförmigen Wandabschnitte 11'' am hinteren Ende der Fachböden 12 und des Bodens 10 bilden Einschubbegrenzungen für die in die einzelnen Abteile 6 der Fächer 3 eingesetzen Schubladen 15, wie das deutlich aus Fig. 2 ersichtlich ist. Erkennbar ist aus den Fig. 1 und 2 ferner, daß die in Verbindung mit dem Gehäuse 2 des Schubladen-Magazin 1 bildenden Schubladen 15 aus bekannten, standardmäßigen Lagerkästen, insbesondere Lagersichtkästen bestehen, die einen wenigstens dreiseitig umlaufend angeordneten Stapelrand 16 haben, der gegenüber dem Kastenkörper seitwärts nach außen und nach oben abgewinkelt profiliert ist. Die erfin-dungsgemäßen Rastnocken auf den Fachböden 12 und die Gegenrasten am hinteren Ende der Lagerkästen sind in den Fig. 1 bis 3 nicht dargestellt.

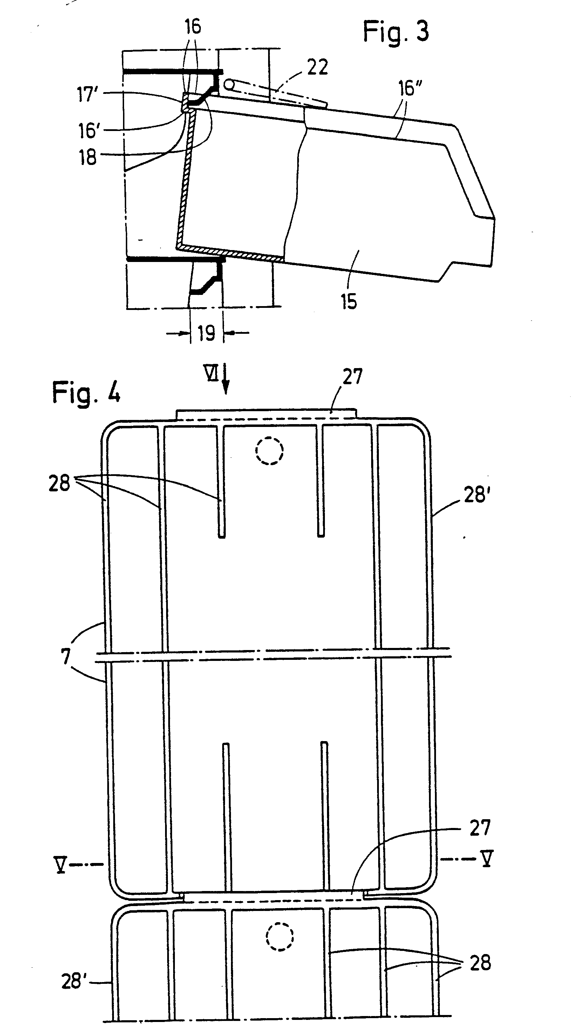

Der nach oben abgewinkelte Flansch 17' des rückwärtigen Stapelrand-Abschnittes 16' der als Schubladen 15 benutzten Lagersicktkästen wirkt mit einem von der vorderen, oberen Begrenzungskante jedes Faches 3 bzw. jedes Abteils 6 nach abwärts gerichteten Anschlagsteg 18 zusammen, sobald die Schublade 15 aus dem Gehäuse 1 herausgezogen wird, wie das aus Fig. 3 ersichtlich ist.

Der Anschlagsteg 18 hat dabei die Form eines nach abwärts und rückwärts gerichteten Hakengliedes, dessen Gesamttiefe etwa der dreifachen Breite der abgewinkelten Stapelränder 16' der als Schubladen 15 benutzten Lagersichtkästen entspricht. Hierdruch wird sichergestellt, daß auch die aus dem Gehäuse 2 herausgezogenen Schubladen 15 noch eine sichere Stützauflage auf den sie tragenden Fachboden 12 bzw. den Boden 10 des Gehäuses 3 behalten, wie das ebenfalls aus Fig. 3 ersichtlich ist.

Aus Fig. 1 ergibt sich ferner, daß die als Hakenglieder ausgebildeten Anschlagstege 18 mit einer gesamten Länge 20 ausgeführt sind, die kürzer bemessen ist, als die Breite der Abteile 6 in den einzelnen Fächern 3, derart, daß die voneinander weg gerichteten Enden der Anschlagstege 18 jeweils Abstand 21 von den benachbarten Seitenwänden 7 bzw. 8 und von den Versteifungswänden 5 aufweisen.

Die Gesamtlänge 20 der als Hakenglieder ausgeführten Anschlagstege 18 ist dabei auf die lichte Weite zwischen den nach oben abgewinkelten 17'' der seitlichen Stapelrand-Abschnitte 16'' der als Schubladen 15 benutzten Lagersichtkästen abgestimmt, so daß diese durch die Anschlagstege 18 auch noch eine seitliche Führung erhalten.

Während es in vielen Fällen ausreicht, auf den einzelnen Fachböden 12 bzw. auf den Boden 10 des Gehäuses 1 Trenn- und/oder Führungsstege 4 vorzusehen, die eine geringere Höhe als die streifenförmigen Wandabschnitte 11'' der Rückwand 11 haben, empfiehlt es sich, wenn es auf eine hohe Stabilität des Gehäuses 2 ankommt, die Trenn- und/oder Führungsstege als sich über die ganze Höhe der Fächer 3 erstreckende, jeweils mit der Fachdecke und dem Fachboden verbundene Versteifungswände 5 auszuführen, wie dies aus Fig. 2 ersichtlich ist. Die Versteifungswände 5 brauchen dabei aber nicht über die gesamte Fachtiefe mit der Fachdecke verbunden zu sein, sondern es reicht auch aus, wenn sie mit der jeweiligen Fachdecke nur in dem Bereich in Verbindung stehen, in welchem sich die Anschlagstege 18 befinden. Diese Ausbildung der Versteifungswände 5 ist in Fig. 2 dargestellt.

Als vorteilhaft kann es sich auch erweisen, an den oberen, vorderen Begrenzungskanten der einzelnen Fächer 3 Klappen oder Laschen 22 anzulenken, die wenigstens einen oberen Teilabschnitt an der vorderen Querseite der als Schubladen 15 verwendeten Lagersichtkästen abdecken. Vorzugsweise ist die Länge der einzelnen Klappen oder Laschen 22 so bemessen, daß sie die Sichtöffnung der als Schubladen 15 benutzten Lagersichtkästen völlig übergreifen.

Wenn es erwünscht ist, die in das Gehäuse 2 des Schubladen-Magazins eingeschobenen Schubladen 15 gegen unbefugten Zugriff zu sichern, dann besteht die Möglichkeit, jede Klappe oder Lasche 22 in ihre Abdecklage am Gehäuse, insbesondere an den Seitenwänden 7 und 8 desselben, zu verriegeln. Dies ist auf einfache Weise beispielsweise dadurch möglich, daß durch in beiden Seitenwänden 7 und 8 vorhandene Löcher Sicherungsstäbe hindurchgesteckt werden, die sich beispielsweise durch kleine Vorhängeschlösser oder auch andere Sicherungselemente in ihrer Lage fixieren lassen.

Damit das Schubladen-Magazin 1 sich ohne weiteres anwenden oder an anderen Trägern aufhängen läßt, ist der obere Wandabschnitt 11' der Rückwand 11 des Gehäuses 2 mit schlüssellochartig profilierten, nach oben verengten Löchern 23 ausgestattet, in die an der Wand oder am Träger befestigte Halteglieder mit verdicktem Kopfteil eingerückt werden können.

In jeder der beiden Seitenwände 7 und 8 des Gehäuses 2 können ferner mehrere Löcher 24 vorgesehen werden, die Eingriffsmöglichkeiten für Drahthaken 25 bieten, an denen sich wiederum Werkzeuge oder auch andere Teile im Bedarfsfalle aufhängen lassen. Wenn es erwünscht ist, mehrere Schubladen-Magazine 1 übereinanderstehend anzuordnen, wie das aus Fig. 4 ersichtlich ist, empfiehlt es sich, an der unteren Querkante jeder Seitenwand 7 und 8 eine Ausklinkung 26 und auf der oberen Querkante jeder Seitenwand 7 und 8 eine Zunge 27 anzuordnen. (Fig. 1, 2 und 4 bis 6), die dann wechselseitig ineinandergreifen, wenn die Gehäuse 2, wie aus Fig. 4 hervorgeht, aufeinandergesetzt werden. Eine gegenseitige, formschlüssige Lagensicherung der beiden Gehäuse 2 ist dann gewährleistet.

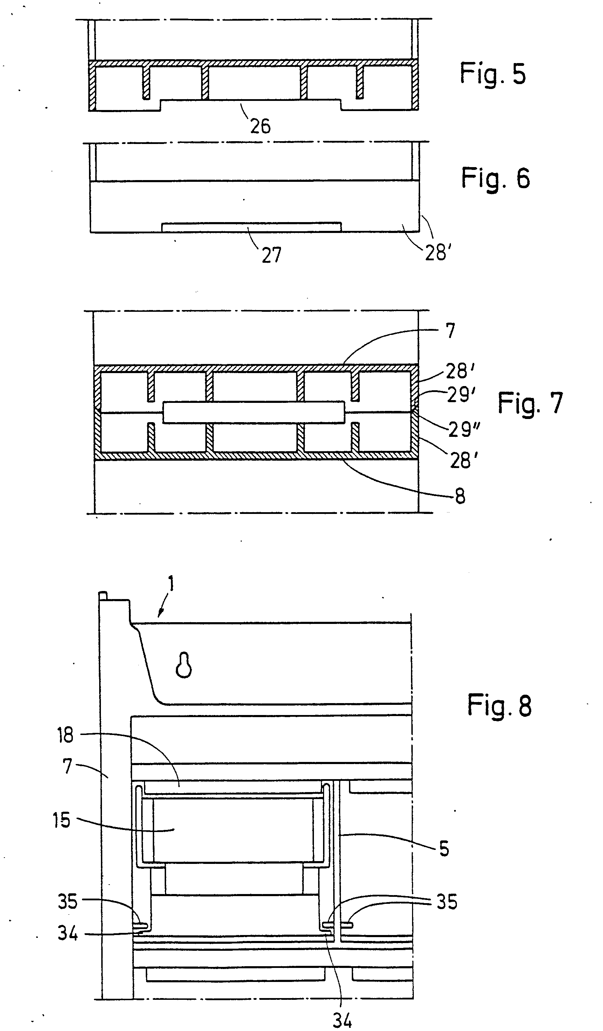

Es empfiehlt sich, die Seitenwände 7 und 8 der Gehäuse 2 zur Erhöhung ihrer Formstabilität mit normal zu ihrer Ebene gerichteten Versteifungsstegen 28 auszustatten und diese zum Teil als Umfangsstege 28' auszubilden. In dem der unteren Querkante der Seitenwände 7 und 8 zugeordneten Umfangssteg 28' können sich dann die Ausklinkungen 26 befinden, wie das die Fig. 5 zeigt, während auf dem der oberen Querkante der Seitenwände 7 und 8 zugeordneten Umfangssteg 28' die Zungen 27 sitzen, wie das aus Fig. 6 erkennbar wird.

In vielen Fällen ist es auch wünschenswert, mehrere Schubladen-Magazine 1 unmittelbar nebeneinander aufzustellen oder aufzuhängen. Damit in diesem Falle ein fugendichtes Aneinanderreihen der Schubladen-Magazine 1 möglich ist und auch eine gegenseitige Lagenausrichtung erreicht werden kann, sind gemäß Fig. 7 die Umfangsstege 28' der einen Seitenwand 7 innenseitig mit Anfasungen oder Falzungen 29' versehen, während die andere Seitenwand komplementär dazu außenseitig an den Umfangsstegen 28' Anfasungen oder Falzungen 29" aufweist. Beim Nebeneinandersetzen mehrerer Schubladenmagazine kommen dann die Anfasungen bzw. Falzungen 29', 29" in gegenseitigen Formschlußeingriff, wie das aus Fig. 7 hervorgeht.

Es erweist sich auch als günstig, sowohl das Gehäuse 2 als auch die Schubladen 15 der Schubladen-Magazine 1 als Kunststoffformteile herzustellen. Dabei ist es für die Formgebung des Gehäuses 2 wichtig, daß deren Rückwand 11 nicht über die gesamte Gehäusehöhe geschlossen ausgebildet ist, sondern jeweils zwischen den Wandabschnitten 11' und 11" Öffnungen aufweist, die sich über die Gesamtbreite der einzelnen Fächer 3 erstrecken.

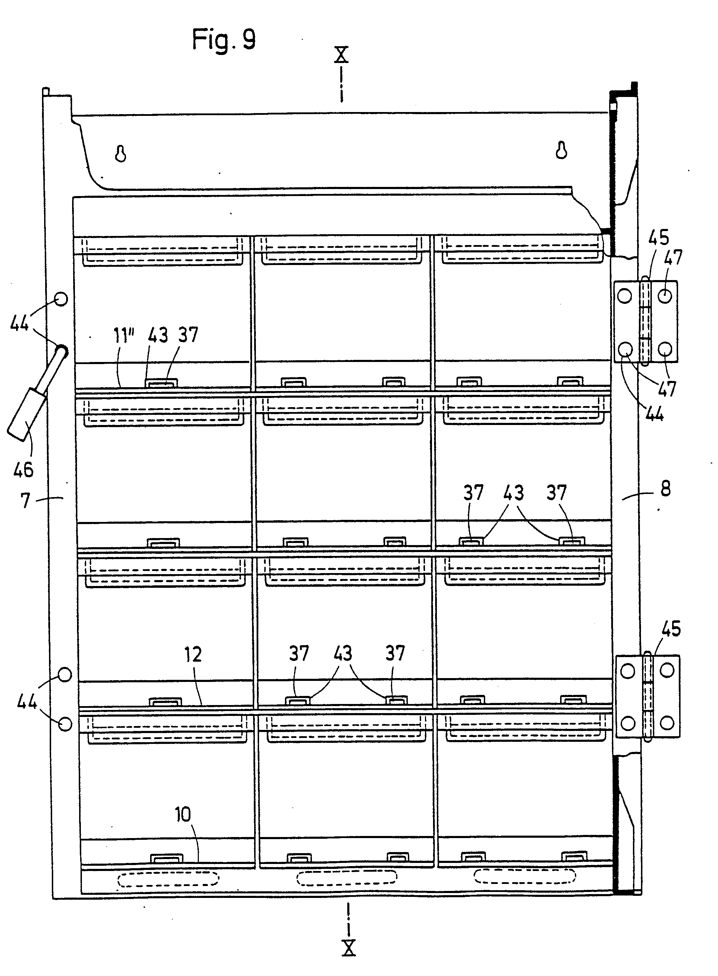

Das Schubladen-Magazin 1 nach den Fig. 9 bis 11 hat im wesentlichen die gleiche Ausbildung wie dasjenige nach den Fig. 1 bis 3. Deshalb sind auch die entsprechenden Bauteile bzw. Ausgestaltungen mit gleichen Bezugszeichen versehen.

Auf dem Boden 10 und jedem der zwischen diesem und der Decke 9 im Abstand übereinander eingeformten Fachböden 12 mit Abstand 36 vor den als Einschubbegrenzungen für die in die Fächer 3 eingesetzten Schubladen 15 dienenden Wandabschnitten 11" und Rastnocken 37 vorgesehen sind. Mit diesen Rastnocken 37 können dabei Gegenrasten 38 in Eingriff treten, die sich am Boden der einzelnen Schubladen 15 in Verlängerung von deren Rückwand 15' hinter einem bogenförmigen Bodenanschluß 15" befindet.

Auf dem Boden 10 bzw. den Fachböden 12 sind in jedem Fach 3 eine größere Anzahl von Rastnocken 37 angeordnet. So ist in Fig. 9 in den linken Abteilen 6 sämtlicher Fächer 3 je ein Rastnocken 37 vorgesehen, während sich im mittleren und im rechten Abteil 6 jedes Faches 3 auf dem Boden 10 bzw. den Fachböden 12 jeweils zwei Rastnocken 37 befinden.

Die Gegenrast 38 an den Schubladen 15 besteht hingegen vorzugsweise aus über die gesamte Breite derselben durchgehenden Leisten, womit sichergestellt ist, daß sie mit jeder möglichen Anordnung von Rastnocken 37 zusammenwirken kann.

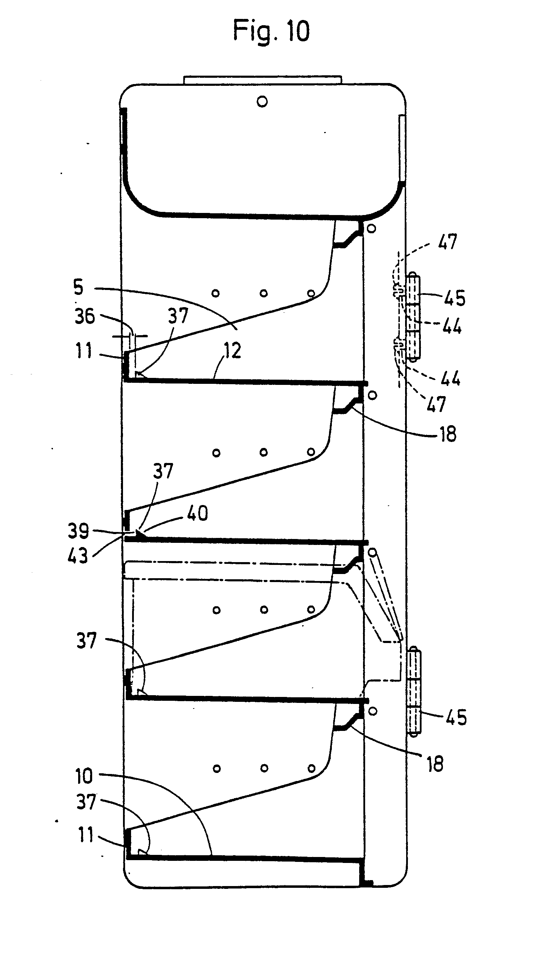

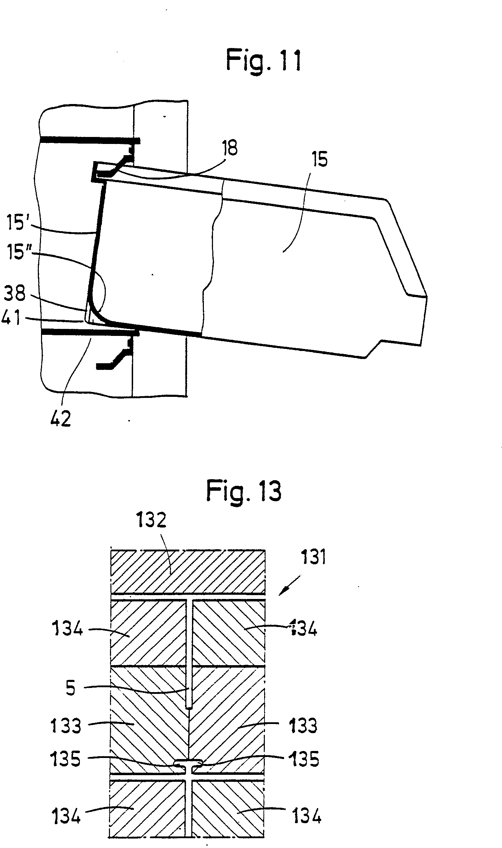

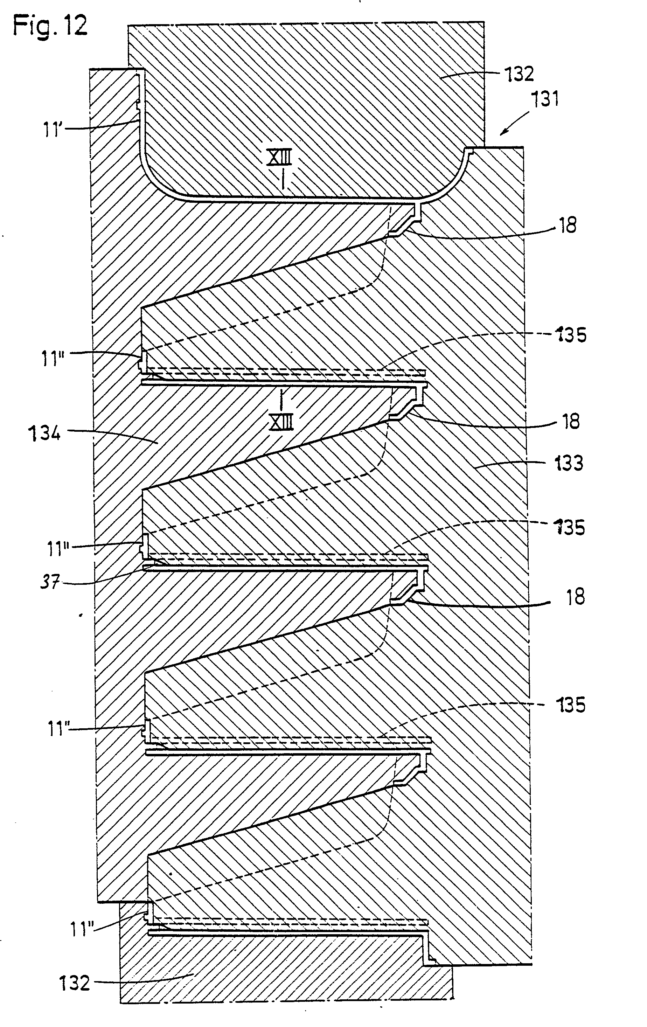

Aus Fig. 10 ist ohne weiteres ersichtlich, daß die Rastnocken 37 eine den Wandabschnitten 11" zugewendete steile, und zwar insbesondere parallel zu diesen verlaufende Flanke 39 haben und außerdem eine hiervon abgewendete, flach geneigte Flanke 40 aufweisen. Andererseits ist aber aus der Fig. 11 auch ersichtlich, daß die Gegenrast 38 an den Schubladen 15 außenseitig mit einer Anfasung oder Abrundung 41 versehen ist, während sie innenseitig eine normal zur Bodenebene der Schublade 15 gerichtete Eingriffsfläche 42 aufweist.

Durch diese Ausgestaltung wird erreicht, daß beim Einschieben der Schubladen 15 in die Fächer 3 bzw. die Abteile 6 deren Gegenrast 38 problemlos auf die Rastnocken 37 aufgleitet und dann unter dem Eigengewicht der Schubladen 15 mit diesen in Halteeingriff gelangt. Beim Transport der Schubladen-Magazine 1 wird hierdurch einem selbsttätigen Herausschieben der Schubladen 15 aus den Fächern 3 bzw. den Abteilen 6 wirksam verhindert. Sollen die Schubladen aber herausgezogen werden, ist es notwendig, durch entsprechenden Druck auf ihr vorderes Ende ihr hinteres Ende etwas anzuheben, damit die Gegenrast 38 mit den Rastnocken 37 außer Eingriff gelangt.

Für die Formgebung der Rastnocken 37 auf dem Boden 10 bzw. den Fachböden 12 mit Hilfe eines in den Fig. 12 und 13 dargestellten Formwerkzeuges ist es wichtig, daß sie im Bereich von Fensterausschnitten 43 der Wandabschnitte 11" liegen. Im Bereich dieser Fensterausschnitte 43 können dann nämlich einander zugeordnete Formabschnitte der beiden zusammenarbeitenden Kernformen 33 und 34 des Formwerkzeuges 31 nach Fig. 12 mit Formabschnitten versehen werden, die die problemlose Ausbildung der Rastnocken 37 erreichen.

Den Fig. 9 und 10 der Zeichnung ist weiterhin zu entnehmen, daß die beiden Seitenwände 7 und 8 des Gehäuses 2 in ihren Umfangsstegen 28', und zwar im Bereich der Gehäuse-Vorderseite Durchbrüche 44 aufweisen können. Diese Durchbrüche 44 sind dabei so angeordnet und ausgebildet, daß sie einerseits als Befestigungseingriffe für Scharniere 45 benutzt werden können, andererseits aber auch zur Bildung von Einhängeösen für die Bügel von Vorhängeschlössern 46 dienlich sind.

Mit Hilfe der Scharniere 45 lassen sich dann nämlich zwei baulich gleiche Schubladen-Magazine 1 so gelenkig verbinden, daß ihre Gehäuse-Vorderseiten wahlweise gegeneinander oder aber voneinander weggeschwenkt werden können. Die gegeneinander geschwenkten Schubladen-Magazine 1 können dann über die Vorhängeschlösser 46 gegeneinander festgelegt und damit unzugänglich gemacht werden.

In Fig. 10 ist angedeutet, daß die Scharniere über angeformte Ansätze 47 in den Durchbrüchen 44 verrastet und/oder verspannt werden können.

Zur Herstellung der Gehäuse 2 können dann nämlich Formwerkzeuge 131 verwendet werden, wie sie in den Fig. 12 und 13 gezeigt sind. Diese Formwerkzeuge 131 werden dabei von einer mehrteiligen Hauptform 132 für die Außenkonturen des Gehäuses 2 sowie von zugehörigen Kernformen 133 und 134 gebildet, wobei letztere die Innenkonturen des Gehäuses 2 mit den Fächern 3, den Trenn- und/oder Führungsstegen 4 bzw. Versteifungswänden 5, den Wandabschnitten 11" und den Anschlagstegen 18 bestimmen.

Die beiden Kernformen 133 und 134 sind dabei als relativ zu der mehrteiligen Hauptform 132 nach entgegengesetzten Seiten verschiebbare Züge ausgeführt, und zwar dergestalt, daß die Kernform 134 die oberen, nach rückwärts verschiebbaren Züge bildet, während die Kernform 133 die unteren, nach vorwärts verschiebbaren Züge aufweist.

Wichtig bei dieser Ausführung der Kernformen 133 und 134 ist, daß die oberen, nach rückwärts verschiebbaren Züge der Kernform 134 an ihrem vorderen Ende die Innenkontur der als Hakenglieder gestalteten Anschlagstege 18 aufweisen, während ihr hinteres Ende der Außenkontur für die Wandabschnitte 11' und 11" der Rückwand 11 entspricht. Andererseits haben die an der Kernform 133 befindlichen unteren, nach vorwärts verschiebbaren Züge an ihrem hinteren Ende die Außenkontur der als Hakenglieder ausgeführten Anschlagstege 18, während ihr vorderes Ende der Innenkontur der streifenförmigen Rückwandabschnitte 11' angepaßt ist.

Die Züge beider Kernformen 133 und 134 sind, wie Fig. 13 zeigt, ferner so ausgeführt, daß sie an ihren Längsseiten miteinander die Innenkontur für die Trenn- und/oder Führungsstege 4 bzw. für die Versteifungswände 5 der Fächer 3 bilden.

In Fig. 8 ist noch ein Ausschnitt eines Schubladen-Magazins in einer der Fig. 1 entsprechenden Darstellung gezeigt, aus dem sich ergibt, daß als Schubladen 15 auch Lagersichtkästen benutzt werden können, die an ihren bodenseitigen Längskanten seitwärts auskragende Randleisten 34 haben. In diesem Falle erweist es sich als zweckmäßig, die Trenn- und/oder Führungsstege 4 bzw. Versteifungswände 5 mit die Randleisten 34 der Schubladen 15 übergreifenden Stützstegen 35 zu versehen. Durch das Zusammenwirken der Randleisten 34 und der Stützstege 35 wird beim Herausziehen und beim Einschieben der Schubladen 15 die Führungssicherheit derselben wesentlich verbessert.

Fig. 13 zeigt, daß die zur Bildung der Stützstege 35 notwendigen Hohlräume im Formwerkzeug 31 durch entsprechende Profilierung der Züge an der Kernform 33 geschaffen werden können.

**Patentansprüche**

1. Schubladen-Magazin, insbesondere für die Vorratshaltung und/oder Lagerung von Kleinteilen, bestehend aus einem mindestens ein horizontales Fach (3) aufweisenden Gehäuse (2) und aus in dieses herausziehbar eingesetzten Schubladen (15), wobei einerseits an oder nahe der oberen, vorderen Begrenzungskante jedes Faches eine Anschlagfläche und andererseits an der oberen, hinteren Begrenzungskante jeder Schublade (15) eine Gegenanschlagfläche (17') vorgesehen ist, die in gegenseitiger Anlage den horizontalen Auszugweg der Schubladen (15) begrenzen, hingegen das völlige Herausnehmen der ausgezogenen Schubladen (15) in einer von vorne nach hinten gekippten Lage ermöglicht, und wobei die Anschlagflächen am Gehäuse (2) durch von der oberen, vorderen Begrenzungskante jedes Faches (3) nach abwärts in den Lichtraum der Fächer (3) gerichtete Stege (18) gebildet sind, gegen die der rückwärtige, obere Abschnitt der Schubladen (15) in Ausgangsstellung als Gegenanschlag in Anschlagverbindung bringbar ist, dadurch gekennzeichnet, daß die Schubladen (15) aus stapelbaren Lagerkästen, insbesondere Sichtlagerkästen, mit wenigstens dreiseitig umlaufend angeordneten (16', 16") seitwärts und nach oben abgewinkeltem Stapelrand (16) bestehen, bei denen der nach oben abgewinkelte Flansch (17') des rückwärtigen Stapelrand-Abschnittes (16') den Gegenanschlag bildet, daß am unteren Ende der Seitenwände (7, 8) des Gehäuses (2) Ausklinkungen (26) und am oberen Ende derselben Zungen (27) ausgebildet sind, die bei mehreren übereinandergesetzten Gehäusen (2) zur Lagensicherung wechselseitig ineinandergreifen (Fig. 4), und daß mit Abstand (36) vor der an der hinteren, unteren Begrenzungskante vorgesehenen Gegenanschlagfläche (11') jedes Faches (3) auf dem Fachboden (12) Rastnocken (37) ausgebildet sind und die die Schubladen (15) bildenden Lagersichtkästen an ihrem hinteren Ende bodennah eine Gegenrast (38) aufweisen (Fig. 9 und 10).

2. Schubladen-Magazin nach Anspruch 1, dadurch gekennzeichnet, daß die Ausklinkungen (26) sich in und die Zungen (27) sich auf normal zur Ebene der Seitenwände (7 und 8) des Gehäuses (2) gerichteten Umfangsstegen (28') derselben befinden (Fig. 1, 5 und 6).

3. Schubladen-Magazin nach Anspruch 2, dadurch gekennzeichnet, daß die Umfangsstege (28') der einen Seitenwand (8) des Gehäuses (2) außenseitig und die Umfangsstege (28') der anderen Seitenwand (7) des Gehäuses (2) komplementär dazu innenseitig mit Anfasungen oder Falzungen (29" bzw. 29') versehen sind, die bei Nebeneinanderanordnung mehrerer Gehäuse (2) zur Lagensicherung wechselseitig ineinandergreifen (Fig. 7).

4. Schubladen-Magazin nach einem der Ansprüche 1 bis 3, dadurch gekennzeichnet, daß auf dem Boden (12) jedes Faches (3) mehrere Rastnocken (37) mit Abstand nebeneinander vorgesehen sind, während die Gegenrast (38) der die Schubladen (15) bildenden Lagersichtkästen aus über deren Breite durchgehenden Leisten bestehen.

5. Schubladen-Magazin nach einem der Ansprüche 1 bis 4, dadurch gekennzeichnet, daß die Rastnocken (37) eine den Gegenanschlagflächen (11') zugewendete steile, vorzugsweise zu diesen parallel verlaufende, Flanke (39) sowie eine von diesen abgewendete, flach geneigte Flanke (40) haben, während die Gegenrast (38) außenseitig eine Anfasung oder Abrundung (41) hat und innenseitig einen normal zur Bodenebene gerichtete Eingriffsfläche (42) aufweist.

6. Schubladen-Magazin nach einem der Ansprüche 1 bis 5, dadurch gekennzeichnet, daß die Rastnocken (37) im Bereich von Fensterausschnitten (43) der Gegenanschlagflächen (11') auf die Fachböden (12) geformt sind.

7. Schubladen-Magazin nach einem der Ansprüche 1 bis 3, dadurch gekennzeichnet, daß zwischen den oberen Enden der Seitenwände (7 und 8) des Gehäuses (1), unterhalb der die Zungen (27) tragenden Umfangsstege (28'), ein Griffstab (14) als Stapelhandhabe angeordnet ist.

8. Schubladen-Magazin nach Anspruch 7, dadurch gekennzeichnet, daß der Griffstab (14) mit Abstand oberhalb der das obere Fach (3) begrenzenden Gehäusedecke (9) angeordnet ist und dabei die Gehäusedecke (9) ein muldenförmig vertieftes Ablagefach (13), z. B. für Werkzeuge, bildet (Fig. 2).

9. Schubladen-Magazin nach Anspruch 1, dadurch gekennzeichnet, daß auf dem Boden (10 bzw. 12) der Fächer (3) des Gehäuses in Richtung der Gehäusetiefe bzw. quer zur Gegenanschlagfläche (11') verlaufende Trenn- und/oder Führungsstege (4) für die Schubladen (15) vorgesehen sind.

10. Schubladen-Magazin nach Anspruch 9, dadurch gekennzeichnet, daß die Trenn- und oder Führungsstege (4) als sich über die ganze Höhe des Faches (3) erstreckende, mit Fachdecke und -boden verbundene Versteifungswände (5) ausgebildet sind (Fig. 2).

11. Schubladen-Magazin nach einem der Ansprüche 9 und 10, bei dem die als Lagerkästen ausgebildeten Schubladen (15) an ihren bodenseitigen Längskanten seitwärts auskragende Randleisten (34) haben, dadurch gekennzeichnet, daß die Trenn- und/oder Führungsstege (4) bzw. Versteifungswände (5) mit die Randleisten (34) der als Lagerkästen ausgebildeten Schubladen (15) übergreifenden Stützstege oder -zungen (35) versehen sind (Fig. 8).

12. Schubladen-Magazin nach Anspruch 1, dadurch gekennzeichnet, daß zwischen den Seitenwänden (7 und 8) des Gehäuses (1) an den oberen, vorderen Begrenzungskanten der Fächer (3) Klappen oder Laschen (22) angelenkt sind, die wenigstens einen oberen Teilabschnitt der vorderen Querseite der als Lagerkästen ausgebildeten Schubladen (15) abdecken (Fig. 2).

13. Schubladen-Magazin nach Anspruch 12, dadurch gekennzeichnet, daß die Klappen oder Laschen (22) in ihrer Abdecklage am Gehäuse (2), insbesondere an den Gehäusewänden (7 und 8), verriegelbar sind.

14. Schubladen-Magazin nach Anspruch 1, dadurch gekennzeichnet, daß die Gegenanschlagflächen (11') jedes Faches (3) von Bereichen der Rückwand (11) des Gehäuses (2) gebildet sind, die unterhalb von Ausschnitten (30) liegen, welche unmittelbar unter der zugehörigen Fachdecke (9 bzw. 12) enden sowie sich über die gesamte Lichtweite des Faches (3) erstrecken.

15. Formwerkzeug zur Herstellung der Gehäuse nach einem oder mehreren der Ansprüche 1 bis 14, mit einer mehrteiligen Hauptform (32) für die Außenkonturen des Gehäuses (2) sowie mit die Innenkonturen des Gehäuses (2) und der Fächer (3) bestimmenden Kernfom (133, 134), die aus relativ zur Hauptform (32) verschiebbar geführten Zügen (133, 134) bestehen, dadurch gekennzeichnet, daß im Formbereich für jedes Fach (3) zwei nach entgegengesetzten Seiten verschiebbar übereinanderliegende Züge (133, 134) die Kernform (133, 134) bilden, wobei der obere nach rückwärts verschiebbare Zug (134) in seinem vorderen Ende die Innenkontur der als Hakenglieder asgebildeten Stege (18) aufweist und an seinem hinteren Ende die Außenkontur der streifenförmigen Wandabschnitte (11") hat, während der untere, nach vorwärts verschiebbare Zug (133) an seinem hinteren Ende die Außenkontur der als Hakenglieder ausgebildeten Stege (18) hat und an seinem vorderen Ende der Innenkontur der streifenförmigen Rückwandabschnitte (11") angepaßt ist, daß beide Züge (133, 134) an ihren Längsseiten miteinander die Innenkontur für die Trenn- und/oder Führungsstege (4) bzw. für die Versteifungswände (5) der Fächer sowie auch für die daran befindlichen Stützstege oder -zungen (35) bilden (Fig. 9 und 10) und daß der untere nach vorwärts verschiebbare Zug (134) an seiner Unterseite Ausnehmungen zur Bildung der Rastnocken (37) aufweist.

**Claims**

1. A storehouse chest of drawers intended especially for the keeping in stock and/or storage of small parts, consisting of a housing (2) which exhibits at least one horizontal compartment (3) and of drawers (15) inserted in it so that they may be drawn out, where there are provided on the one hand at or near the upper front boundary edge of each compartment a stopface and on the other hand at the upper rear boundary edge of each drawer (15) a counter-stopface (17'), which in contact against one another limit the horizontal travel of the drawer (15) when pulled out, whereas complete removal of the pulled-out drawers (15) is made possible in a position tilted from front to rear, and where the stopfaces on the housing (2) are formed by webs (18) directed downwards into the clear space in the compartments (3) from the upper front boundary edge of each compartment (3), against which the rear upper portion of the drawers (15) may in the outwards position be brought into stop-combination as the counter-stop, characterized in that the drawers (15) consist of stackable storage boxes, in particular visual storage boxes having a stacking edge (16) bent out sideways and upwards, arranged running round at least three sides (16', 16"), in which the upwards bent flange (17') of the rear portion (16') of stacking edge forms the counter-stop, that at the bottom end of the sidewalls (7, 8) of the housing (2) notches (26) are formed and at the top end of them tongues (27) which in the case of a number of housings (2) being placed one above the other engage in one another mutually for securing the position (Figure 4), and that on the bottom (12) of the compartment at a distance (36) in front of the counter-stopface (11') provided at the bottom rear boundary edge of each compartment (3) catchdogs (37) are formed and the visual storage boxes forming the drawers (15) exhibit at their respective rear ends a counter-catch (38) near the bottom (Figures 9 and 10).

2. A storehouse chest of drawers as in Claim 1, characterized in that the notches (26) lie in and the tongues (27) lie on webs (28') circumferential to the sidewalls (7 and 8) of the housing (2) and directed normally to the plane of the sidewalls (Figures 1, 5 and 6).

3. A storehouse chest of drawers as in Claim 2, characterized in that the webs (28') circumferential to the one sidewall (8) of the housing (2) are provided on the outside and the webs (28') circumferential to the other sidewall (7) of the housing (2) on the inside in a manner complementary thereto with chamfers or rabbets (29" resp. 29') which in the case of the arrangement of a number of housings (2) side by side engage in one another mutually for securing the position (Figure 7).

4. A storehouse chest of drawers as in one of the Claims 1 to 3 characterized in that upon the bottom (12) of each compartment (3) a number of catchdogs (37) are provided at intervals side by side, whilst the respective countercatch (38) on the visual storage boxes forming the drawers consists of a fillet continuous across the width of the box.

5. A storehouse chest of drawers as in one of the Claims 1 to 4, characterized in that the catchdogs (37) have, turned towards the counter-stopfaces (11'), a steep flank (39) running preferably parallel with them as well as a flank (40) with a shallow slope turned away from them, whilst the counter-catch (38) has on the outside a chamfer or rounding-off (41) and exhibits on the inside a contact face (42) directed normally to the plane of the bottom.

6. A storehouse chest of drawers as in one of the Claims 1 to 5, characterized in that the catchdogs (37) are formed on the bottom (12) of the compartment in the region of window cutouts (43) from the counter-stopfaces (11').

7. A storehouse chest of drawers as in one of the Claims 1 to 3, characterized in that between the top ends of the sidewalls (7 and 8) of the housing (1) underneath the circumferential webs (28') carrying the tongues (27) a griprod (14) is arranged as a stacking-handle.

8. A storehouse chest of drawers as in Claim 7, characterized in that the griprod (14) is arranged at a distance above the housing cover (9) bounding the top compartment (3) and in that case the housing cover (9) forms a trough-shaped sunk pocket (13), e. g., for tools (Figure 2).

9. A storehouse chest of drawers as in Claim 1, characterized in that separator- and/or guide-webs (4) for the drawers (15) are provided on the bottoms (10 resp. 12) of the compartments (3) of the housing, running in the direction of the depth of the housing or respectively transversely to the counter-stopfaces (11').

10. A storehouse chest of drawers as in Claim 9, characterized in that the separator- and/or guide-webs (4) are made as stiffening-walls (5) extending over the whole height of the compartment (3) and connected to the cover and bottom of the compartment (Figure 2).

11. A storehouse chest of drawers as in one of the Claims 9 and 10, in which the drawers (15) made as storage boxes on their longitudinal edges at the bottom have edge fillets (34) jutting out sideways, characterized in that the separator-and/or guide-webs (4) or respectively stiffening-walls (5) are provided with supporting webs or tongues (35) which overlap the edge fillets (34) on the drawers (15) made as storage boxes (Figure 8).

12. A storehouse chest of drawers as in Claim 1, characterized in that between the sidewalls (7 and 8) of the housing (1) to the upper front boundary edges of the compartments (3) flaps or coverplates (22) are hinged, which cover over at least one upper partial section of the front crossface of the drawers (15) made as storage boxes (Figure 2).

13. A storehouse chest of drawers as in Claim 12, characterized in that the flaps or coverplates (22) may be locked in their covering position to the housing (2), in particular to the walls (7 and 8) of the housing.

14. A storehouse chest of drawers as in Claim 1, characterized in that the counter-stopfaces (11') of each compartment (3) are formed by regions of the rear wall (11) of the housing (2), which lie underneath cutouts (30) which end directly below the associated compartment cover (9 resp. 12) and also extend across the whole inside width of the compartment (3).

15. A mould tool for the production of the housing as in one or more of the Claims 1 to 14, having a multipart main mould (32) for the outer contours of the housing (2) as well as having a core mould (133, 134) defining the inner contours of the housing (2) and of the compartments (3), which consists of drawing tools (133, 134) guided to be able to shift relatively to the main mould, characterized in that in the region of the mould for each compartment (3) two drawing tools (133, 134) lying one above the other so as to be able to shift towards opposite sides form the core mould (133, 134), where the upper drawing tool (134) which is able to shift towards the rear exhibits at its front end the inner contour of the webs (18) made as hook members and at its rear end has the outer contour of the strip-form wall sections (11"), whilst the lower drawing tool (133) which is able to shift towards the front has at its rear end the outer contour of the webs (18) made as hook members and at its front end is adapted to the inner contour of the strip-form rear wall sections (11"), that the two drawing tools (133, 134) form with one another at their longitudinal sides the inner contour of the separator- and/or guide-webs (4) or respectively of the stiffening walls (5) of the compartments as well as also of the supporting webs or tongues (35) lying on them (Figures 9 and 10), and that the lower drawing tool (134) which is able to shift towards. the front exhibits on the underside of it recesses for the formation of the catchdogs (37).

**Revendications**

1. Magasin à tiroirs, notamment pour le dépôt et/ou le stockage de pièces de petites dimensions, constitué par une enveloppe (2) contenant au moins un casier (3) horizontal et par des tiroirs (15) qui y sont engagés de manière à pouvoir en être retirés, le dispositif comprenant, d'une part, au niveau ou à proximité du bord supérieur antérieur de chacun des casiers, une surface de butée et, d'autre part, au niveau du bord supérieur postérieur de chacun des tiroirs (15), une surface (17') de contre-butée qui, par contact réciproque, limitent le déplacement horizontal des tiroirs (13) vers l'extérieur, mais permettent l'extraction complète des tiroirs (13) complètement tirés dans une position de basculement d'avant en arrière et les surfaces de butée au niveau de l'enveloppe (2) étant constituées par des garnitures (18) qui partent du bord supérieur antérieur de chacun des casiers (3) et s'étendent vers le bas dans l'espace intérieur du casier (3) et contre lesquelles la partie postérieure supérieure des tiroirs (15) peut, dans la position de départ, venir s'appliquer comme la contre-butée d'un dispositif de butée, caractérisé en ce que les tiroirs (15) sont constitués par des caissons superposables, notamment par des caissons pouvant comporter des informations, qui comportent, sur trois côtés au moins, à leur périphérie (16', 16"), un bord d'empilage (16) replié en angle latéralement et vers le haut et dans lesquels la bride (17') de la partie (16') du bord d'empilage postérieure qui est pliée vers le haut constitue la contre-butée, en ce que l'extrémité inférieure des parois latérales (7, 8) de l'enveloppe (2) et l'extrémité supérieure de ces mêmes parois comportent respectivement des entailles (26) et des languettes (27) qui, en cas de superposition de plusieurs enveloppes (2), s'engagent réciproquement les unes dans les autres pour assurer leur position (Figure 4) et en ce qu'à une certaine distance (36) en avant de la surface (11') de contre-butée de chacun des casiers (3) qui se trouve au niveau du bord postérieur inférieur le fond (12) du casier comporte des cames d'arrêt et que les caissons pouvant comporter des informations qui constituent les tiroirs (15) comportent un contre-cran d'arrêt (38) à proximité du fond de leur extrémité postérieure (Figures 9 et 10).

2. Magasin à tiroirs selon la revendication 1, caractérisé en ce que les entailles (26) et les languettes (27) se trouvent respectivement dans et sur des bandes périphériques (28') normales au plan des parois latérales (7 et 8) de l'enveloppe (2) et contenues dans ce plan (Figures 1, 5 et 6).

3. Magasin à tiroirs selon la revendication 2, caractérisé en ce que les bandes périphériques (28') de l'une des parois latérales (8) de l'enveloppe (2) et les bandes périphériques (28') de l'autre paroi latérale (7) de l'enveloppe (2) comportent respectivement, à l'extérieur et à l'intérieur, d'une manière complémentaire, des parties biseautées ou pliées (29" ou 29') qui, en cas de superposition de plusieurs enveloppes (2), s'engagent réciproquement les unes dans les autres pour assurer leur position (Figure 7).

4. Magasin à tiroirs selon l'une des revendications 1 à 3, caractérisé en ce que le fond (12) de chacun des casiers (3) comporte plusieurs cames d'arrêt (37) situées à une certaine distance les unes des autres tandis que les contre-dispositifs d'arrêt (38) des caissons portant des informations qui constituent les tiroirs (15) sont constitués par des bandes s'étendant sur toute leur largeur.

5. Magasin à tiroirs selon l'une des revendications 1 à 4, caractérisé en ce que les cames d'arrêt (37) comportent, du côté des surfaces (11') de contre-butée, un flanc (39) de forte pente, de préférence parallèle à ces surfaces, et, de l'autre côté, un flanc (40) de faible pente, tandis que le contre-dispositif d'arrêt (38) comporte, du côté extérieur, une partie biseautée ou un arrondi (41) et, du côté intérieur, une surface d'engagement (42) orientée perpendiculairement au plan du fond.

6. Magasin à tiroirs selon l'une des revendications 1 à 5, caractérisé en ce que les cames d'arrêt (37) sont, dans la zone d'échancrure en fenêtres (43), des surfaces (11') de contre-butée, réalisées sur les fonds (12) des casiers.

7. Magasin à tiroirs selon l'une des revendications 1 à 3, caractérisé en ce qu'entre les extrémités supérieures des parois latérales (7, 8) de l'enveloppe (11), au-dessous des bandes périphériques (28') qui portent les languettes (27), une barre de prise (14) fait partie du dispositif d'empilage.

8. Magasin à tiroirs selon la revendication 7, caractérisé en ce que la barre de prise (14) est placée à une certaine distance au-dessus du panneau (9) de l'enveloppe qui limite le casier supérieur (3) et que le panneau (9) de l'enveloppe délimite un casier (13) plus profond, par exemple pour des outils (2).

9. Magasin à tiroirs selon la revendication 1, caractérisé en ce que le fond (10 ou 12) des casiers (3) de l'enveloppe comporte, dans le sens de la profondeur de l'enveloppe ou transversalement par rapport à la surface (11') de la contrebutée, des bandes de séparation et/ou de guidage (4) pour les tiroirs (15).

10. Magasin à tiroirs selon la revendication 9, caractérisé en ce que les bandes de séparation et/ou de guidage (4) sont des parois de raidissement (5) qui s'étendent sur toute la hauteur du casier (3) et sont reliées au panneau couvrant et au fond du casier (Figure 2).

11. Magasin à tiroirs selon l'une des revendications 9 ou 10, dans lequel les tiroirs (15) constitués par des caissons comportent, le long de leurs bords longitudinaux, des deux côtés, des bandes marginales (34) en porte-à-faux, caractérisé en ce que les bandes de séparation et/ou de guidage (4) ou les parois de raidissement (5) comportent des bandes ou des languettes d'appui (35) qui s'engagent au-dessus des bandes marginales (34) des tiroirs (15) constitués par des caissons (Figure 8).

12. Magasin à tiroirs selon la revendication 1, caractérisé en ce qu'entre les parois latérales (7 et 8) de l'enveloppe (1), au niveau des bords supérieurs antérieurs des casiers (3), s'articulent des clapets ou éclisses (22) qui recouvrent au moins une partie supérieure du côté transversal antérieur des tiroirs (15) constitués par des caissons (Figure 2).

13. Magasin à tiroirs selon la revendication 12, caractérisé en ce que, dans leur position de recouvrement, les clapets ou éclisses (22) peuvent être verrouillés sur l'enveloppe (2), notamment au niveau des parois (7 et 8) de l'enveloppe.

14. Magasin à tiroirs selon la revendication 1, caractérisé en ce que les surfaces (11') de contrebutée de chaque casier (3) sont constituées par des parties de la paroi postérieure (11) de l'enveloppe (2) qui se trouvent au-dessous des parties (30) qui se terminent immédiatement sous le panneau couvrant correspondant (9 ou 12) du casier et s'étendent sur toute la largeur intérieur du casier (3).

15. Outil de moulage pour la fabrication de l'enveloppe selon l'une ou plusieurs des revendications 1 à 14, qui comprend un moule principal (32) en plusieurs parties, pour les contours extérieurs de l'enveloppe (2), et un noyau de moule (133, 134) déterminant les contours intérieurs de l'enveloppe (2) et des casiers (3), qui sont constitués par des parties (133, 134) guidées de manière à pouvoir se déplacer par rapport au moule principal (32), caractérisé en ce que dans la partie du moule correspondant à chaque casier (3) deux parties (133, 134) superposées, qui peuvent se déplacer dans des directions opposées, constituent le noyau du moule (133, 134), la partie supérieure (134) qui peut se déplacer vers l'arrière présentant, à son extrémité antérieure, le contour antérieur des bandes (18) en forme de crochet et comportant, à son extrémité postérieure, le contour extérieur des parties de parois (11″) en forme de bandes tandis que la partie inférieure (133) qui peut se déplacer vers l'avant présente à son extrémité postérieure le contour extérieur des bandes (18) en forme de crochet et, à son extrémité antérieure, est adaptée au contour intérieur des parties (11') de paroi postérieure en forme de bande, en ce que les deux parties (133, 134) constituent ensemble, au niveau de leurs côtés longitudinaux, le contour intérieur pour les bandes (4) de séparation et/ou de guidage ou pour les parois de raidissement (5) des casiers ainsi que pour les bandes ou les languettes d'appui (35) qui s'y trouvent (Figures 9 et 10) et en ce que la partie (134) qui peut se déplacer vers l'avant comporte, sur son côté inférieur, des évidements pour la réalisation des cames d'arrêt (37).

## Fig.1

Fig. 2

Fig. 3

Fig. 4

Fig. 5

Fig. 6

Fig. 7

Fig. 8

## Fig. 9

# Fig. 10

## Fig. 11

## Fig. 13

Fig. 12